Europäisches Patentamt

European Patent Office

Office européen des brevets

(11) Publication number: **0 113 196**
**A1**

## (12) EUROPEAN PATENT APPLICATION

(21) Application number: **83307321.6**

(22) Date of filing: **01.12.83**

(51) Int. Cl.³: **D 04 C 1/06**
//B29D3/02

(30) Priority: **01.12.82 GB 8234187**

(43) Date of publication of application:
**11.07.84 Bulletin 84/28**

(84) Designated Contracting States:
**DE FR GB**

(71) Applicant: **CAMBRIDGE CONSULTANTS LIMITED**
**Science Park Milton Road**
**Cambridge CB4 4DW(GB)**

(72) Inventor: **Temple, Stephen**
**66 Girton Road**
**Cambridge(GB)**

(74) Representative: **Brown, David Alan et al,**
**MATHYS & SQUIRE 10 Fleet Street**
**London EC4Y 1AY(GB)**

(54) Woven tubular structure.

(57) A woven tubular structure having substantial radial thickness has axial yarns (12) parallel to the axis of the tube and braided yarns (30) which are interlaced with one another and with the axial yarns. The axial yarns (12) are arranged in a plurality of concentric rings, and some or all of the braided yarns (30) follow helical paths which extend alternately from the outer surface to the inner surface and from the inner surface to the outer surface of the tube, to give structural integrity to the tube. The tubular structure may be impregnated with resin which is cured. Novel machinery for producing the woven structure is disclosed.

FIG.4

## Woven tubular structure

The present invention relates to woven tubular structures.

Composite fabrics comprising fibre reinforced resin are well known. The structure so formed has improved mechanical strength if the fibres are oriented by forming yarns or sheets which are layed in predefined directions and subsequently impregnated with resin. Structural integrity is further improved if the yarns are interwoven and then impregnated with resin. Two and three dimensional interweaving techniques are known which produce both blocks and tubes of fibre for impregnation.

Braided tubes are well known. However, known braiding techniques can produce tubes of substantial thickness only by using yarns which themselves of subsantial thickness, or by braiding one tube over an already braided tube in a multi-stage process, to produce a multi-layer tube in which there is no structural connection between the layers.

The object of the present invention is to adapt braiding techniques for the production of woven tubular structures having substantial radial thickness. One object is to produce a novel tubular fabric structure which may be braided using high modulus yarns.

The invention includes a woven tubular structure including axial yarns extending substantially parallel to the axis of the tubular structure and braided yarns which are interlaced with one another and with the axial yarns, characterised
in that the axial yarns are positioned in at least some of a
plurality of courses extending substantially parallel to the
axis of the tubular structure and arranged in two or more
concentric rings, and the braided yarns extend generally helically
along paths between the axial yarns, braided yarns extending helically
in one direction crossing braided yarns extending helically in the
opposite direction, at least some of the braided yarns following
paths which alternately extend towards and away from the radially
outer surface of the tubular structure and cross axial yarns in
a plurality of said rings to form a multi-layer woven structure
of substantial radial thickness.

Preferably, some or all of the braided yarns follow paths
which alternately extend from the radially outer surface to the
radially inner surface and from the radially inner surface to
the radially outer surface of the tubular structure.

Suitably, there are M concentric rings of courses, each
ring having N equally spaced courses and each ring being displaced
$\frac{\pi}{N}$ in angular position relative to adjacent rings and forming 2N
spiral groups of M courses and 2N cylindriform spiral paths
between adjacent groups in any tube section;

there being formed P closed cylindrical passages between the
courses, where P is the highest common factor of M + 1 and N,
each passage following a spiral path from the outer surface
to the inner surface and returning to the outer surface following
successive spiral paths an even number of times before closing the passage, said passages being interlaced and crossing one another;

and axial yarns being inserted in some or all of said courses and a
number of braided yarns being inserted helically in either or both
senses of rotation in each cylindrical passage, said braided yarns
in any one passage crossing braided yarns inserted in other passages
in the opposite sense of rotation.

Preferably, both (M + 1) and N are even, so that the number P
of closed passages is even, and braiding yarns can be inserted
helically in one sense of rotation in half the number of passages
and in the opposite sense of rotation in the remaining passages.

In one form of the invention, the braided yarns overlap
only one axial yarn in the inner and outer surfaces.

In another form of the invention, the braided yarns overlap
more than one axial yarn in the inner and outer surfaces. The structure
may still be defined as having P closed passages for the insertion of
braided yarns, where P is the highest common factor of N and M + 1,
if M is defined as being equal to the number of rings of axial yarn
courses incremented by the number of overlaps exceeding one at each
or either of the inner and outer surfaces.

The woven tubular structure of the present invention has
substantial structural integrity. After production, the woven
structure may be impregnated with resin and cured. Alternatively,
the structure may find applications in which such impregnation
is not required. The fabric structure can be varied to emphasise
its bending or torsional strength or capacity to resist internal
pressure.

The invention also includes apparatus for producing a woven tubular structure as defined above, comprising means for supplying axial yarns, guide means for guiding the axial yarns into some or all of the axial courses, means for guiding along predefined tracks shuttles carrying bobbins of braiding yarn, drive means for driving shuttles along said tracks, means for converging the axial yarns and braiding yarns to the ring fell of the woven tubular structure, and means for withdrawing the woven tubular structure from the ring fell.

In one form of the apparatus, the guide means comprises tubular guides mounted in a sector in a substantially plane section and disposed substantially in M concentric rings, each having N equally spaced guides and each ring being displaced substantially $\frac{\pi}{N}$ in angular portion relative to adjacent rings and forming 2N spiral groups of M guides and 2N spiral lanes between adjacent groups in the section.

In another form of the invention, the guide means comprises tubular guides arranged in a substantially cylindrical section, the guides being disposed in a substantially radial direction in M coaxial rings in said section, each ring having M equally spaced guides and each ring being displaced substantially $\frac{\pi}{N}$ in angular position relative to adjacent rings and forming 2N helical groups of M guides and 2N helical lanes between adjacent groups in the sector.

Preferably, the tracks for shuttles each comprise a closed track, there being P such closed tracks between the guides, where P is the highest common factor of M + 1 and N, each track following successive spiral or helical lanes $\frac{2N}{P}$ times before closing the track, said tracks being interlaced and crossing one another, and each track includes one or more shuttles which carry bobbins of braiding yarns and insert the braiding yarns helically in the corresponding passages among the axial yarns in the woven structure. Preferably there are an equal number of shuttles in each track, each shuttle having the same velocity and direction of travel and each inserting braiding yarns in the corresponding passage at the same helix angle and shuttles in adjacent tracks having the same velocity but the opposite direction of travel and each inserting braiding yarns in adjacent passages in a substantially equal and opposite helix angle at the fell of the woven structure.

The means for driving the shuttles in said tracks may comprise gear wheels adjacent the tracks concentric with the tubular guides, which each engage the track and rotate with an equal peripheral velocity and a sense of rotation corresponding with the direction of travel of shuttles on the track, so that the gear wheels mesh a flexible toothed member which is integral with and leads or lags the bobbin carrier in the shuttles.

In one configuration the tracks and the guides are located in a substantially plane section and the gear wheels which drive the toothed belts on each shuttle lie substantially in a plane. In a further configuration the gear wheels are located substantially in a cylindrical section and have axes which are substantially radial in direction.

The three-dimensional woven tubular structure may be varied in structure according to the properties required, by varying such features as the diameter of the tube former, the withdrawal rate, the vertical location of the fell, yarn tensions and the counts of axial or braided yarns.

The invention also includes tubular artifacts having the structure or structures described above or woven or made using the apparatus defined above.

The invention will now be described by way of example by reference to the following drawings, in which:

Figure 1 shows the arrangement of axial yarns in a woven tube according to the invention and illustrates groups of spiral yarn courses,

Figure 2 shows the arrangement of spiral paths between the groups of spiral yarn courses in the tube,

Figure 3 shows one of two closed passages for a tube having five rings each comprising sixteen yarn courses,

Figure 4 is a perspective view of the axial and helical yarns forming part of a woven tube according to the invention,

Figure 5 shows an alternative configuration for a woven tube having seven rings each of sixteen yarn courses and shows a closed passage among eight possible passages,

Figure 6 is a diametral section through one form of machinery suitable for braiding the woven tube of the invention, taken on line Y-Y of Figure 7,

Figure 7 shows scrap plane sections of the drive means and of the system of shuttle tracks in the machinery, taken on lines A-A and B-B of Figure 8,

Figure 8 shows a section of the machine taken on line X-X of Figure 7, and

Figures 9 and 10 show diametral and plane sections of an alternative embodiment of machinery according to the invention.

Referring to the drawings, a woven tube 10 consists of axial yarns 12, which extend substantially parallel to the axis of the tube, and braided yarns 30, which are interlaced with one another and with the axial yarns.

The axial yarns 12 are arranged in a plurality of concentric rings, with an equal number of yarns in each ring.

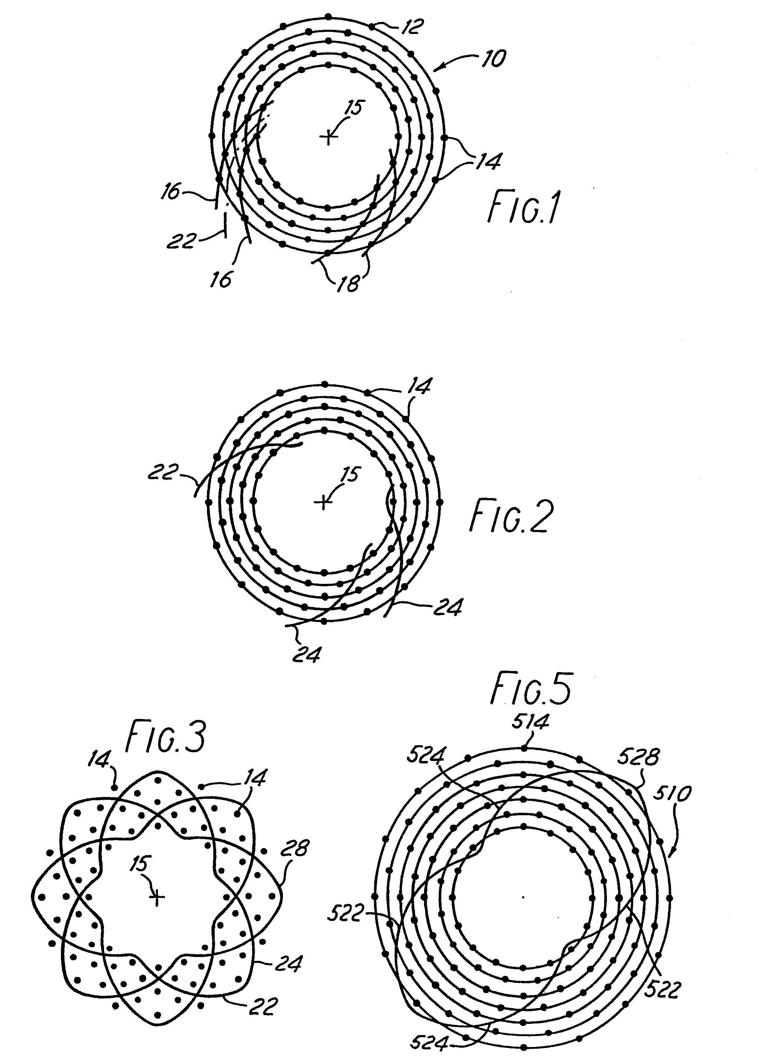

Each axial yarn follows a course 14 which is substantially parallel to the axis 15 of the tube 10. In the example shown in Figure 1, there are five rings each containing sixteen equally spaced yarns 12 in courses 14. The yarns 12 in each ring are angularly displaced by $\frac{\pi}{16}$ radians relative to the yarns in the adjacent rings.

As shown in Figure 1, the courses 14 can be considered as forming groups, such as groups 16 and 18, extending spirally from the outer surface to the inner surface of the tube 10. There are sixteen spiral groups 16 having one sense of rotation and sixteen spiral groups 18 having the opposite sense of rotation, each axial course 14 forming part of two such groups. Each pair of adjacent spiral groups having the same sense of rotation defines between the groups a path, such as path 22, which can receive the braided yarns 30. Each path extends spirally from the outer surface to the inner surface of the tube, and there are sixteen paths, such as path 22, extending in one sense of rotation and sixteen paths, such as path 24, extending in the opposite sense of rotation. Each path is cylindriform, being a section of a cylinder extending the length of the tube.

Figure 3 shows a closed passage 28 extending between the courses 14. The passage 28 follows one of the spiral paths 22 from the outer surface of the tube to the inner surface and returns by an adjacent path to the outer surface, and continues along further inward and outward paths in succession until the passage is closed. The passage 28 overlaps only one axial course 14 at the inner and outer surfaces of the tube. The passage 28 is thus made up of sixteen spiral paths. It will be appreciated that a second closed passage can be traced, along paths separated by $\frac{\pi}{16}$ radians from the paths shown in Figure 3.

The braided yarns 30 are woven into the tube so that one or more yarns are inserted into each of the two closed passages 28. The braided yarns in each passage progress from the outer surface of the tube to the inner surface and return to the outer surface successively while progressing axially along the tube, so that each yarn follows a series of helical paths, as shown in Figure 4. The helix angle of each braided yarn 30 is variable, depending on the number of yarns in each closed passage, the relative counts of the axial yarns 12 and braided yarns 30 and the packing density of the woven tube. The braided yarns 30 in the two closed passages 28 are inserted so that they have opposite and equal helix angles and are inserted in opposite directions, so that the braided yarns cross one another as illustrated in Figure 5.

The woven tube illustrated in Figures 1 to 4 has five rings each of sixteen courses 14 for axial yarns 12, which provides two closed passages for the braided yarns 30, each passage being made up of sixteen spiral paths.

However, tubes in accordance with the invention can be made using various combinations of the number M of rings of axial courses and the number N of yarns per ring. It is preferably that both M + 1 and N be even. Then P, which is the highest common factor of N and M + 1, is also even. It can be shown that:

- each closed passage passes $(\frac{M + 1}{P})$ times roung the woven tube

- each closed passage comprises $\frac{2N}{P}$ spiral paths before closure

- there are P distinct passages, where P is even

For example, Figure 5 shows a woven tube 510 having M = 7 rings and N = 16 courses 514 for axial yarns. The highest common denominator of M + 1 and N is then P = 8. There are then P = 8 closed passages in the woven structure, of which one closed passage 528 between the axial yarn courses 514 is illustrated. Each closed passage 528 has $\frac{M + 1}{P}$ = 1 turn round the tube and comprises $\frac{2N}{P}$ = 4 spiral paths 522 and 524. Diagrams for other configurations of M and N can similarly be drawn.

Where there are more than two closed passages, as in the embodiment of Figure 5, the yarns in adjacent passages are braided so that they have opposite helix angles and cross one another.

The woven tube, having axial yarns and helically
braided yarns, has substantial structural integrity.  By increasing
the proportion of helical yarns relative to the axial yarns,
the tube can be given principal rigidity in torsion.  Similarly
by increasing the relative proportion of axial yarns, the bending
rigidity can be emphasised.  Where the tube is to be subject
to external pressure, the ratio of the two yarn-sets can be
set at an optimal ratio to deal with the longitudinal and
hoop stresses on the tube.  It will therefore be evident that
a great variety of tubular structures can be produced having the
general structure for the woven tube described above.

Tubes according to the invention can be made using
yarns comprising fibres having structural properties, such as
glass, kevlar or carbon fibre.  If the woven tube is then
impregnated using a resin, a three-dimension woven tubular composite
structure is obtained having substantial structural integrity
and low specific weight.  Composite structures could also be formed
by filling the woven structure in other ways, for example to
form a carbon-carbon matrix.

For example, pipe lines useful for the transport of oil
or gas can be readily constructed.  These have the merit of
relatively low weight for installation and superior integrity
compared with ferrous welded tubes which can corrode or develop
cracks.  A further possible application is for scaffolding tubes of low weight which makes handling easier. A further application is the drive shaft for motor vehicles where a low weight is desirable to reduce the vehicle total and unsprung mass.

Other possible applications of the woven tube will be apparent to the man skilled in the art. It will be apparent that the woven tube may find use in application which do not require impregnation with resin.

The woven tubes illustrated in Figures 1 to 5 are braided so that each braided yarn 30 overlaps only one axial yarn 12 at the inner and outer surface before it returns to the other surface. It will be evident to those skilled in the art that such yarns can be arranged to overlap two or more axial yarns 12 in the rings in the inner and outer surface, to give a smoother or twill-like surface. Such a fabric would, however, also be obtained if one or more of the inner or outer rings of axial yarns were omitted, and by this artifice the formulae given above the the number of closed passages and other structural parameters can be made applicable to these structures also.

For example, a woven tube having five rings with sixteen yarns per ring, for which the braided yarns spanned two axial yarns on the outer and inner rings would be visually similar to the fabric illustrated in Figure 5, with the inner and outer rings omitted.

- 13 -

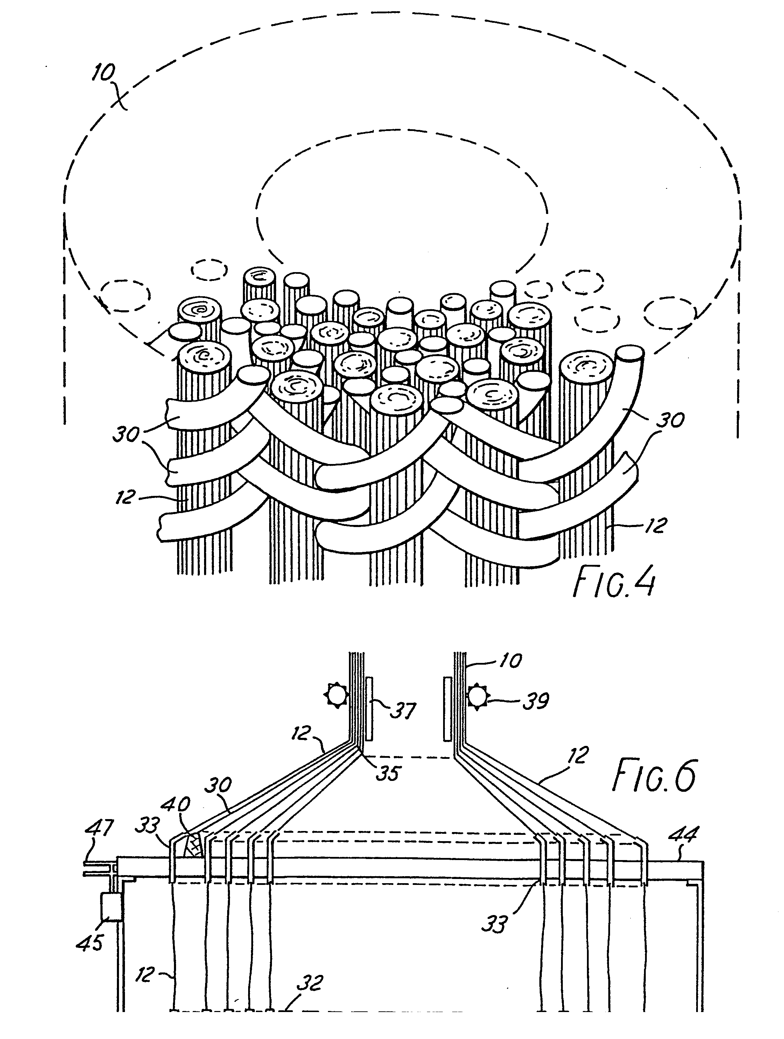

Woven tubular structures in accordance with the invention can be manufactured employing a specially adapted braiding process, whose characteristics will now be described by reference to suitable machinery illustrated in Figures 6 to 10.

Referring to Figures 6 to 8, machinery in accordance with the invention includes a creel 32 of cones for axial yarns 12. These are threaded through tubular guides 33, arranged in M rings with N guides per ring. The yarns then converge to the fell 35 where the woven structure is formed. The axial yarns 12 subsequently make part of the tube 10 produced over the former 37. During manufacture the tube is withdrawn continuously by the withdrawal drive 39, which may take any suitable form, for example rotating or reciprocating members engaging the tube.

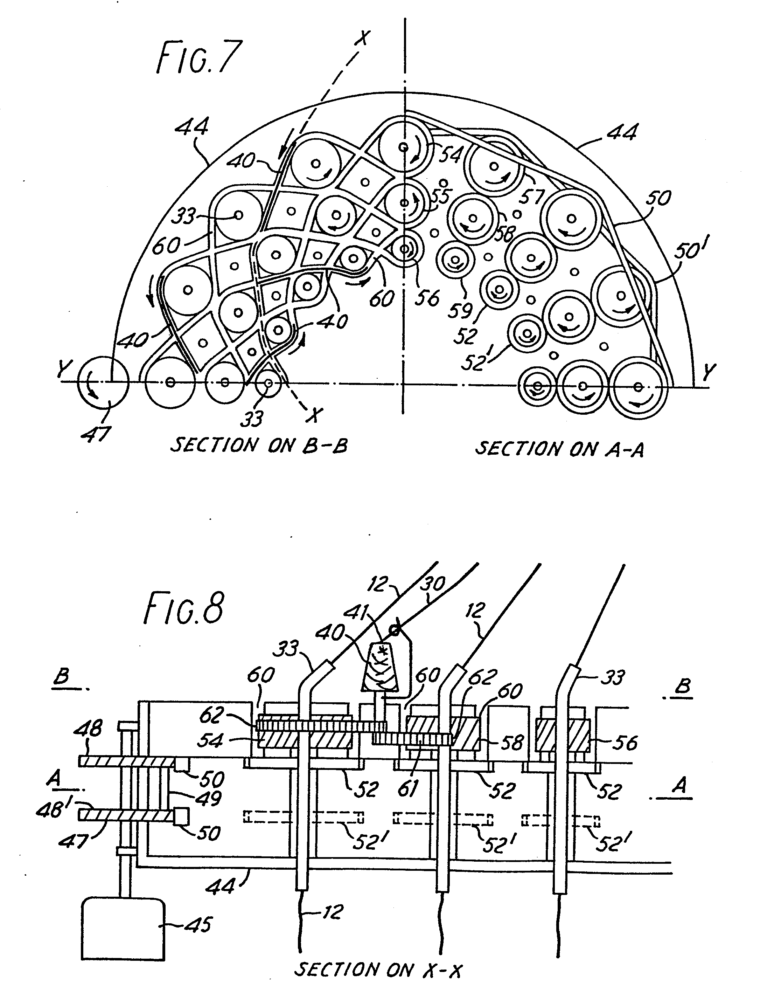

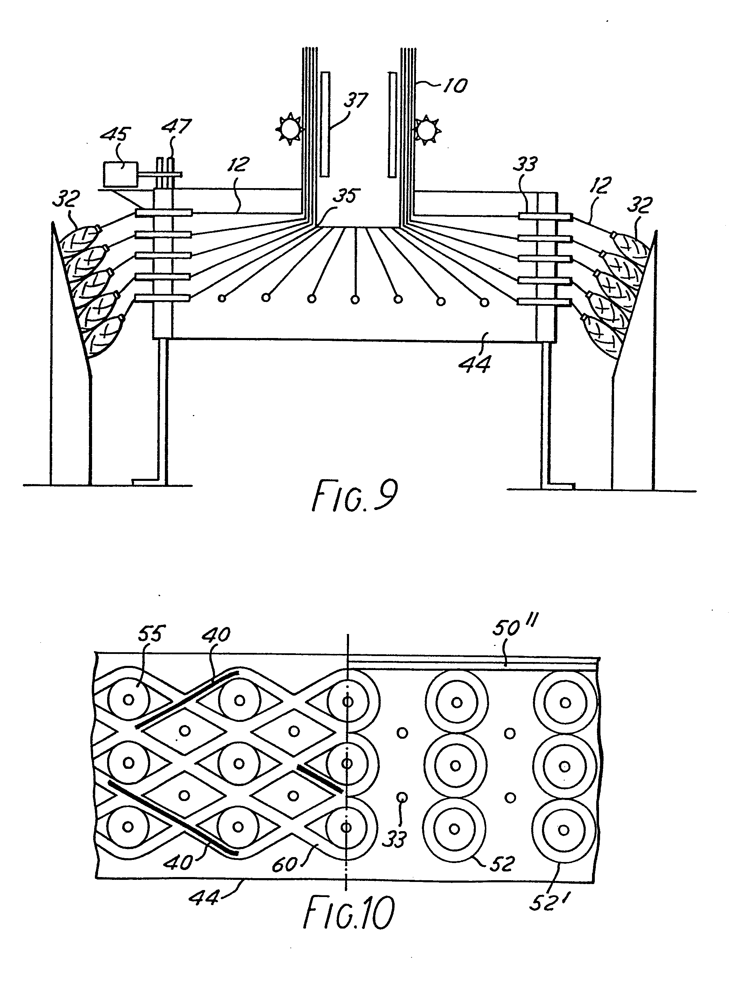

The braided yarns 30 are inserted by shuttles 40 which travel on tracks 60 in the sector 44. The sector 44 is illustrated in greater detail in Figures 7 and 8.

On the right hand side of Figure 7 a section AA of the sector 44 is shown illustrating the shuttle drive system. On the left hand side a section BB of the sector 44 illustrates the tracks 60 along which bobbins 41 for the braiding yarns 30 are carried by shuttles 40.

The drive system includes a motor 45 (Figures 6 and 8) which drives the differential 47, incorporating two contra-rotating gears 48, 48' and an idler gear 49. The differential drive gear 48 engages a toothed belt 50 and gear 48' engages a toothed belt 50'. The belts extend round the periphery of the whole machinery as illustrated on the right hand side of Figure 7. Belt 50 engages a group of radial feed gears 52, which alternate with radial feed gears 52' engaged by the other belt 50'. The two groups of feed gears are driven in opposite directions, as indicated by the arrows. The feed gears are all mounted on common axes with the tubular guides 33 and effect rotation of sets of drive gears 54, 55, 56 and 57, 58, 59. The pitch circle ratios of all the gears are chosen so that the drive gears all rotate at the same peripheral speed.

The left hand side of Figure 7 shows the path of the tracks 60. These run in lanes in between the tubular guides 33, each track running in a generally spiral direction. Section XX shows the path of one track section, there being 2N such spiral track sections in the machine. The track sections form closed tracks 60 in the machine, corresponding to the passages of braided yarns in the woven tubular structure. Each closed track comprises $\frac{2N}{P}$ such track sections, there being P such closed tracks, where P is the highest common factor of M + 1 and N.

The closed tracks 60 are made up of fixed wall sections which include runners to enable the shuttles 40 to circulate freely and the drive gears 54 to 56 and 57 to 59 project into the tracks, each gear rotating such that its periphery moves in the truck in the direction in which shuttles are to be driven in the track.

The shuttles 40 run in the closed tracks 60 engaging the runners. Each shuttle 40 includes flexible toothed belts 61 and 62 which extend along the track 60 in opposite directions. The drive gears engage the toothed belts, to propel the shuttles along the tracks. Each shuttle 40 carries one of the bobbins, 41 along its closed track 60 and, because all of the shuttles move with an equal velocity, the braided yarns 30 are inserted into the corresponding closed passage in the tubular structure at the same helix angle.

As shown in Figure 8 the leading and lagging flexible toothed belts 61 and 62 are connected to the body of the shuttle 40 at different levels. This enables the shuttles 40 to cross each other's path more closely, which enables larger number of shuttles to be accommodated into the tracks without collision.

In operation of the machinery, axial yarns 14 are fed through all or selected ones of the tubular guides 33. Shuttles 40, each loaded with a bobbin 41, are engaged in each of the closed tracks 60, the number and initial position of each shuttle depending on the desired structure of the woven tube, and the yarns 30 are led to the fell 35. As the woven tube is withdrawn from the fell, the shuttles 40 follow their closed track 60, to insert the braided yarns in the selected passages between the axial yarns 14.

Although Figures 5 to 8 show a plane sector 44, the machinery can also be built so that sector 44 is cylindrical in form. This is illustrated in Figures 9 and 10. Here the tubular guides 33 for the axial yarns are radial, and the closed tracks 60 are made up of track sections which are straight rather than curved in the section such as XX. The drive gears all have the same diameter and the track sections 60 are also similar to one another. Further if it is desired to make a woven structure having M = 7 or 9 or a greater number, this may be readily accomplished by adding standard sized parts to the machine with the least modification.

Another advantage of this form of the machinery is that length of the toothed drive belt is able to be the minimum at all points in the track so that the shuttle density can be improved.

It will be appreciated that the machinery for forming woven tubes in accordance with the invention could take other forms.

CLAIMS:

1.      A woven tubular structure including axial yarns extending substantially parallel to the axis of the tubular structure and braided yarns which are interlaced with one another and with the axial yarns, characterised in that the axial yarns are positioned in at least some of a plurality of courses extending substantially parallel to the axis of the tubular structure and arranged in two or more concentric rings, and the braided yarns extend generally helically along paths between the axial yarns, braided yarns extending helically in one direction crossing yarns extending helically in the opposite direction, at least some of the braided yarns following paths which alternately extend towards and away from the radially outer surface of the tubular structure and cross axial yarns in a plurality of said rings to form a multi-layer woven structure of substantial radial thickness.

2.      A tubular structure as claimed in Claim 1, characterised in that some or all of the braided yarns follow paths which alternately extend from the radially outer surface to the radially inner surface and from the radially inner surface to the radially outer surface of the tubular structure.

3.      A tubular structure as claimed in Claim 2, characterised in that there are M concentric rings of courses, each ring having N equally spaced courses and each ring being displaced $\frac{\pi}{N}$

in angular position relative to adjacent rings and forming 2N spiral groups of M courses and 2N cylindriform spiral paths between adjacent groups in any tube section;

there being formed P closed cylindrical passages between the courses, where P is the highest common factor of M + 1 and N, each passage following a spiral path from the outer surface to the inner surface and returning to the outer surface following successive spiral paths an even number of times before closing the passage, said passages being interlaced and crossing one another;

and axial yarns being inserted in some or all of said courses and a number of braided yarns being inserted helically in either or both senses of rotation in each cylindrical passage, said braided yarns in any one passage crossing braided yarns inserted in other passages in the opposite sense of rotation.

4. A structure as claimed in Claim 3, characterised in that both (M + 1) and N are even.

5. A structure as claimed in Claim 3 or Claim 4, characterised in that braided yarns are inserted into cylindrical passages which overlap only one axial yarn in the said inner or outer surfaces.

6. A structure as claimed in Claim 3 or Claim 4, characterised in that braided yarns are inserted into cylindrical passages which overlap more than one axial yarn in the inner or outer surfaces.

7.      A structure as claimed in any preceding claim, characterised in that the woven structure is impregnated with resin which is cured.

8.      Apparatus for producing a woven tubular structure as claimed in any preceding claim, comprising means for supplying axial yarns, guide means for guiding the axial yarns into some or all of the axial courses, means for guiding along predefined tracks shuttles carrying bobbins of braiding yarn, drive means for driving shuttles along said tracks, means for converging the axial yarns and braiding yarns to the ring fell of the woven tubular structure, and means for withdrawing the woven tubular structure from the ring fell.

9.      Apparatus as claimed in Claim 8, characterised in that the guide means comprises tubular guides mounted in a sector in a substantially plane section and disposed substantially in M concentric rings, each having N equally spaced guides and each ring being displaced substantially $\frac{\pi}{N}$ in angular portion relative to adjacent rings and forming 2N spiral groups of M guides and 2N spiral lanes between adjacent groups in the section.

10.      Apparatus as claimed in Claim 8, characterised in that the guide means comprises tubular guides arranged in a substantially cylindrical section, the guides being diposed on a substantially radial direction in M coaxial rings in said section, each ring having M equally spaced guides and each ring being displaced substantially $\frac{\pi}{N}$ in angular position relative to adjacent rings and forming 2N helical groups of M guides and 2N helical lanes between adjacent groups in the sector.

11. Apparatus as claimed in Claim 9 or Claim 10, characterised in that the tracks for shuttles each comprise a closed track, there being P such closed tracks between the guides, where P is the highest common factor of M + 1 and N, each track following successive spiral or helical lanes $\frac{2N}{P}$ times before closing the track, said tracks being interlaced and crossing one another, and each track includes one or more shuttles which carry bobbins of braiding yarns and insert the braiding yarns helically in the corresponding passages among the axial yarns in the woven structure.

12. Apparatus as claimed in Claim 9 or Claim 10, characterised in that the means for driving the shuttles in said tracks comprise gear wheels adjacent the tracks concentric with the guide means for the axial yarns, the gear wheels each engaging the track and rotating with an equal periphery velocity and a sense of rotation corresponding with the direction of travel of shuttles on the track, so that the gear wheels mesh with a flexible toothed member which is integral with and leads or lags the bobbin carrier in the shuttles.

FIG.1

FIG.2

FIG.5

FIG.3

0113196

FIG.4

FIG.6

0113196

FIG.7

SECTION ON B-B          SECTION ON A-A

FIG.8

SECTION ON X-X

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 870 580 (BELCHER) <br> * Column 3, line 37 - column 4, line 8; figure 18 * | 1,2,7 | D 04 C 1/06 // <br> B 29 D 3/02 |
| X | FR-A-1 105 915 (CROSSLEY) <br><br> * Page 3, lines 7-15; abstract; figures 1,4 * | 8,9,11 ,12 | |
| A | US-A-4 312 261 (FLORENTINE) | | |
| A | FR-A-2 501 579 (TECHNIQUE DU VERRE TISSE) | | |
| A | FR-A-2 446 175 (SOCIETE EUROPEENNE DE PROPULSION) | | **TECHNICAL FIELDS SEARCHED (Int. Cl. ³)** |
| A | US-A-4 123 832 (SCHULTZ) | | D 04 C <br> B 29 D |
| A | FR-A-1 173 254 (ANGUS) | | |

-----

The present search report has been drawn up for all claims

| Place of search <br> THE HAGUE | Date of completion of the search <br> 13-03-1984 | Examiner <br> VAN GELDER P.A. |
|---|---|---|